# FASCICULE DE BREVET EUROPEEN

(11) **EP 1 184 622 B1**
(45) Date de publication et mention de la délivrance du brevet: **02.07.2008**
(21) Numéro de dépôt: 01402192.7
(22) Date de dépôt: 20.08.2001
(51) Int. Cl.: F23J 15/00, B01D 53/50

(54) **Procédé de génération de chaleur permettant une émission réduite des oxydes de soufre et une consommation réduite d'absorbant**
Verfahren zur Wärmeerzeugung mit reduzierter Emission von Schwefeloxiden und niedrigem Verbrauch von Absorptionsmitteln
Method of generating heat with reduced emission of sulphur oxides and low absorbant consumption

(30) Priorité: 01.09.2000 FR 0011258
(43) Date de publication de la demande: 06.03.2002
(73) Titulaire: Institut Français du Pétrole, 92852 Rueil-Malmaison Cedex (FR)
(72) Inventeur: Martin, Gérard-H, 69230 Saint Genis Laval (FR); Lebas, Etienne, 38200 Seyssuel (FR)

(56) Documents cités:
- EP-A- 0 181 820
- AT-B- 399 214
- FR-A- 2 583 305
- FR-A- 2 636 720
- FR-A- 2 671 855
- FR-A- 2 748 402
- US-A- 4 273 750

## Description

La présente invention concerne un procédé destiné à générer de la chaleur à partir de la combustion d'un combustible contenant notamment du soufre, avec des émissions réduites d'oxyde de soufre.

Depuis quelques années, des réglementations de plus en plus sévères imposent des limitations à l'émission d'oxydes de soufre par les effluents gazeux des générateurs de chaleur et interdisent l'utilisation de combustibles à haute teneur en soufre sans traitement postérieur des oxydes de soufre contenus dans les fumées de combustion. La combustion de certains résidus ou de ressources minières présente cependant des avantages économiques tels par exemple certains charbons s'apparentant aux lignites, ou les résidus pétroliers et les fiouls lourds issus des procédés de raffinerie. Il est cependant possible selon divers procédés et/ou dispositifs décrits dans l'art antérieur de réduire les émissions d'oxydes de soufre et plus spécialement de dioxyde de soufre provenant d'un générateur thermique en traitant les fumées de combustion avant leur rejet.

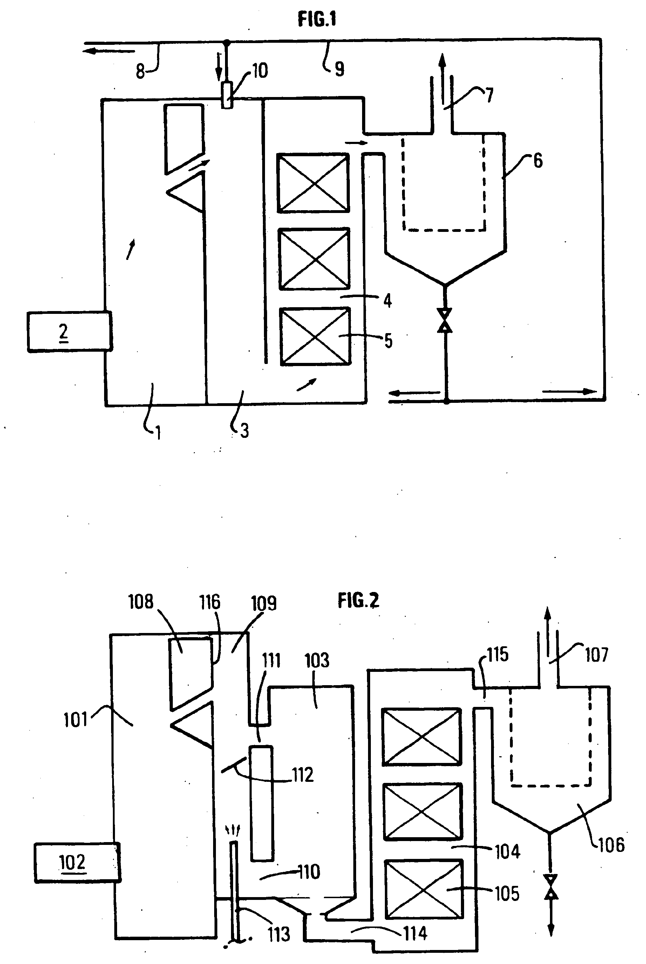

Par exemple certains générateurs thermiques comportent une chambre de combustion, au moins une zone d'échange de chaleur, une chambre de désulfuration comportant au moins un moyen d'injection d'un absorbant solide, cette chambre communiquant avec une zone d'échange par convection, ainsi qu'une chambre de séparation reliée à ladite zone d'échange par convection (figure 1). La chambre de séparation possède au moins une sortie pour l'absorbant usé et au moins une sortie pour les gaz dépollués. Ainsi, les brevets FR 2,636,720 et FR 2,664,022 décrivent un procédé et un dispositif pour générer de la chaleur comportant une désulfuration des effluents avec des particules d'absorbant de fine granulométrie en lit transporté. L'absorbant injecté dans ces générateurs thermiques consiste essentiellement en une matière calcique qui est envoyée, après sulfatation partielle vers une trémie de stockage (ou dépoussiéreur final) généralement constituée par un filtre à manches ou un filtre électrostatique. Ce type de générateur conduit à la production de quantités non négligeables d'absorbant calcique usé, c'est-à-dire sulfaté, avec pour corollaire des problèmes non négligeables de stockage et/ou de valorisation de ces déchets.

Afin de limiter la quantité d'absorbants usés, une amélioration d'un tel procédé a donc consisté à utiliser des absorbants dits «régénérables » essentiellement constitués de composés magnésiens (dolomie, oxyde de magnésium, carbonate de magnésium) tels que ceux revendiqués dans le brevet FR 2,692,813.
Le brevet FR 2,671,855 présente un dispositif utilisant de tels absorbants régénérables en ajoutant à l'appareillage précédemment décrit un moyen de régénération de l'absorbant et des moyens destinés à traiter l'absorbant et/ou les gaz de régénération issus du moyen de régénération. Un tel moyen de régénération peut être par exemple un réacteur filtre tel que décrit dans le brevet FR 2,730,424.

Le recyclage externe de l'absorbant pose cependant de nombreux problèmes :
- une circulation importante de solide dans le générateur thermique et par conséquent un surdimensionnement important de l'ensemble du dispositif (notamment de la taille du filtre électrostatique et des échangeurs de chaleur de la zone d'échange par convection),
- une usure et un encrassement des tubes, nécessitant des opérations de ramonage fréquentes.
- Une baisse du rendement énergétique global du générateur thermique liée aux pertes par chaleur sensibles de l'absorbant dans le circuit de recyclage.

En parallèle, il est connu de l'art antérieur et notamment du brevet FR 2,748,402 une installation de traitement de fumées d'incinération d'ordures ménagères ayant un recyclage interne. Ce dispositif, appelé réacteur CRI, a fait l'objet de travaux de caractérisation qui ont montré qu'il a des performances nettement supérieures à celles d'un réacteur droit traditionnel, en matière de déchloruration des fumées. Le dispositif de déchloruration comprend notamment une zone périphérique pour le recyclage de l'absorbant, une zone intermédiaire pour la déchloruration et une zone centrale pour l'évacuation des fumées purifiées vers une zone extérieure d'échange par convection.

L'objet de la présente invention est un procédé permettant l'intégration du réacteur CRI ou de tout autre réacteur fonctionnant selon le même principe de recyclage interne de l'absorbant à d'autres applications que le traitement de fumées en aval d'incinérateur d'ordures ménagères et à la déchloruration. Alors que la nature des absorbants, les températures réactionnelles et les mécanismes des réactions chimiques mis en jeu sont différents, il a été trouvé que le réacteur CRI présente de façon étonnante un certain nombre d'avantages et d'effets inattendus dans le domaine de la désulfuration de fumées lorsqu'il est intégré (ou juxtaposé suivant les possibilités techniques) à un générateur thermique selon le procédé objet de la présente invention, en permettant un recyclage de l'absorbant directement dans le générateur thermique et non plus à partir du dépoussiéreur final :
- la solution proposée permet d'accroître les rendements de désulfuration, car, à volume réactionnel identique, les fumées sont en contact avec une quantité d'absorbant beaucoup plus importante qu'en réacteur droit traditionnel, tel que revendiqué dans les brevets FR 2,636,720 et FR 2,664,022 et FR 2,671,855.
- il est possible de maintenir une température beaucoup plus constante avec le réacteur CRI, quelle que soit l'allure du générateur thermique, qu'avec un réacteur droit et recyclage externe de l'absorbant à partir du filtre final.
- la désulfuration est moins pénalisante du point de vue énergétique, dans la mesure où l'absorbant recyclé est déjà à la température de réaction, tandis que dans les configurations antérieures, l'absorbant est à une température voisine de l'ambiante et son injection dans le dispositif de désulfuration s'accompagne d'une absorption importante de la chaleur véhiculée par les fumées.
- pour fonctionner selon le procédé objet de la présente demande, le dispositif CRI peut être accolé à une installation existante, moyennant quelques modifications du circuit des fumées et des surfaces d'échange dans la chaudière. Cette possibilité n'existait pas dans les configurations brevetées antérieurement. Il apparaît donc possible de remodeler des installations existantes pour intégrer le réacteur CRI selon le présent procédé, afin de les mettre en conformité avec des réglementations de plus en plus contraignantes sur les rejets atmosphériques.
- grâce à la recirculation de l'absorbant dans le dispositif de désulfuration, les débits d'absorbant qui traversent la zone d'échange par convection sont faibles ; ce qui permet, d'une part, d'éviter des surdimensionnements importants qu'on est toujours obligé de réaliser quand on a des charges en poussières importantes (par exemple on pourra ainsi envisager un espacement plus faible entre les tubes des échangeurs de chaleur) et d'autre part, de limiter l'encrassement, l'usure des tubes et les opérations de ramonage.
- les débits d'absorbant manipulés hors générateur thermique sont plus faibles, ce qui limite la taille et donc le coût des dispositifs de manutention de solide.
- Les solides arrivant au dépoussiéreur final du générateur thermique (filtre à manches ou filtre électrostatique par exemple) n'étant plus constitués que de l'absorbant à régénérer dans le cas des absorbants régénérables ou de l'absorbant à évacuer dans le cas des absorbants non régénérables, et non plus d'une quantité importante d'absorbant à recycler, les dimensions dudit dépoussiéreur final peuvent être sensiblement réduites, ce qui permet des gains d'espace et de coût.

Bien entendu, l'invention ne se limite pas à l'utilisation dans le présent procédé du réacteur CRI décrit dans le brevet FR 2,748,402 et il est également possible selon la présente invention d'utiliser tout type de réacteur présentant les mêmes propriétés de recyclage interne de l'absorbant.

De façon générale, l'invention concerne un procédé de génération de chaleur avec des émissions réduites d'oxydes de soufre dans lequel :
a) on effectue la combustion d'un combustible contenant du soufre dans une zone de combustion comprenant une zone d'échange de chaleur dans laquelle on extrait au moins en partie de la chaleur, et on récupère des effluents ou fumées de combustion à une température comprise entre 800 et 1200°C,
b) on fait traverser les fumées résultantes de ladite combustion et chargées en oxydes de soufre dans un espace servant à l'alimentation et à la distribution des fumées dans un dispositif de désulfuration fonctionnant avec un recyclage d'un absorbant solide des oxydes de soufre,
c) on injecte l'absorbant dans ledit espace,
d) on fait entrer les fumées chargées en oxydes de soufre dans ledit dispositif,
e) on fait pénétrer les fumées désulfurées dans une zone d'échange par convection et on extrait au moins une partie de la chaleur desdites fumées, **caractérisée en ce que :**
   - on sépare le mélange résultant des étapes b) et c) dans une zone de séparation gaz/solide interne dudit dispositif comprenant une zone périphérique pour le recyclage de l'absorbant, une zone intermédiaire pour la désulfuration dans laquelle on fait entrer tangentiellement les fumées dans ledit dispositif, et une zone centrale pour l'évacuation des fumées
   - on évacue de ladite zone interne de séparation, d'une part, l'effluent gazeux débarrassé de la majeure partie des oxydes de soufre et au moins en partie refroidi et, d'autre part, lesdites particules d'absorbant comprenant lesdits composés soufrés pour les recycler.

Avantageusement, on régénère après l'étape e) au moins une partie desdites particules d'absorbant comprenant lesdits composés soufrés et on réinjecte les particules d'absorbant régénéré dans l'espace servant à l'alimentation du dispositif de désulfuration.
Il est possible selon l'invention d'utiliser un absorbant calcique et la température moyenne de désulfuration est alors comprise entre 800 et 1100°C.
Il est également possible d'utiliser un absorbant magnésien régénérable et la température moyenne de désulfuration est dans ce cas comprise entre 700 et 1000°C.
Préférentiellement, on fait traverser après l'étape de combustion a) les fumées par un ou des faisceaux surchauffeurs de vapeur. En général, les débits d'absorbant sont tels que la concentration en solides dans les fumées, hors recyclage, est comprise entre 0,1 et 1000 g/Nm3, le taux de recyclage du gaz dans le dispositif est compris entre 1 et 50 % et le taux de recyclage de l'absorbant est compris entre 1 et 50.
Il est préférable que la granulométrie des absorbants soit comprise entre 0,1 et 1000 microns et que la masse volumique des particules d'absorbant soit comprise entre 100 et 5000 kg/m3.

L'invention sera mieux comprise et ses avantages apparaîtront plus clairement à la lecture de la description suivante donnée à titre illustratif de deux modes de réalisation d'un dispositif fonctionnant suivant le procédé objet de la présente invention.

La figure 1 illustre un exemple de générateur thermique selon l'art antérieur.

Les figures 2, 3 et 4 sont des vues différentes d'un premier mode de réalisation d'un dispositif fonctionnant selon le présent procédé.
La figure 5 schématise un deuxième exemple de réalisation d'un générateur thermique fonctionnant selon les principes de la présente invention.

Un générateur thermique comporte en général comme l'illustre la figure 1 quatre éléments principaux : la chambre de combustion (1) avec son (ou ses) brûleur(s) (2), un espace (3) exempt de faisceaux tubulaires, éventuellement partiellement ou totalement réfractorisé, dans lequel on effectue la désulfuration, une zone d'échange par convection (4) avec ses faisceaux de tubes échangeurs (5) et un dépoussiéreur final (6) relié à une cheminée (non représentée) par une ligne de liaison (7). Ces quatre éléments ont une forme parallélépipédique.

Ce type de générateur thermique peut fonctionner aussi bien avec des absorbants calciques perdus, qu'avec des absorbants régénérables par exemple de type magnésiens, tels que ceux revendiqués dans le brevet FR 2,692,813. L'absorbant frais est apporté par la ligne (8). Il peut être mélangé à de l'absorbant recyclé à partir du dépoussiéreur final (6) et véhiculé via la ligne (9). L'absorbant est injecté sensiblement à l'entrée de la chambre de désulfuration (3) par l'intermédiaire d'un (ou d') injecteur(s) (10). Etant pulvérulent, l'absorbant est rapidement entraîné par les fumées. Il traverse la chambre de désulfuration (3), puis la zone d'échange par convection (4) et est finalement récupéré au dépoussiéreur final. Au soutirage du dépoussiéreur, on renvoie une partie de l'absorbant capté à la chambre de désulfuration par la ligne (9), tandis que l'autre partie est éliminée ou envoyée à la régénération.
Dans cette configuration, on est obligé de recycler une partie importante de l'absorbant pour obtenir des rendements de désulfuration élevés (typiquement, on cherche à capter entre 75 et 90, voire 95 % du S02 présent dans les fumées). Dans une chaudière à absorbant calcique perdu, le débit d'absorbant recyclé est 3 à 5 fois le débit d'absorbant frais, tandis qu'avec des absorbants régénérables, on peut être amené à recycler jusqu'à 10 fois le débit d'absorbant régénéré.

Les figures 2, 3 et 4 illustrent un premier exemple d'un générateur thermique dans lequel on met en oeuvre le présent procédé :

Le générateur (figure 2) comporte comme précédemment une chambre de combustion (101) sensiblement parallélépipédique munie de son (ou ses) brûleur(s) (102) et comprenant au moins une zone d'échange (non représentée) dans laquelle on récupère au moins une partie de l'énergie dégagée par la combustion, un dispositif de désulfuration (103) selon la configuration décrite dans le brevet FR 2,748,402 aux figures 1 à 5, une zone d'échange par convection (104) également sensiblement parallélépipédique avec ses faisceaux de tubes échangeurs (105) et un dépoussiéreur final (106) qui peut être par exemple du type électrofiltre ou filtre à manches. Les fumées sont évacuées à la cheminée par la ligne (107).

De manière plus détaillée, la chambre de combustion (101) est équipée de brûleurs qui fonctionnent avec des combustibles soufrés tels que des fiouls lourds par exemple. Les fumées produites ont des teneurs en S02 comprises typiquement entre 1.000 et 10.000 mg/Nm3. La chambre de combustion est faite en parois membranées qui captent essentiellement par rayonnement une partie de la chaleur produite par la combustion. En sortant de la chambre de combustion, les fumées traversent un ou des faisceaux surchauffeurs (108) et arrivent dans un espace (109) qui sert à l'alimentation du dispositif de désulfuration (103). Comme décrit dans le brevet FR 2,748,402, le dispositif de désulfuration comprend une zone périphérique pour le recyclage de l'absorbant, une zone intermédiaire pour la désulfuration et une zone centrale pour l'évacuation des fumées purifiées vers la zone d'échange par convection (104) par la ligne (114). Il a une forme sensiblement cylindrique et est positionné sensiblement verticalement.

L'essentiel des fumées entre tangentiellement dans le dispositif de désulfuration (103) par la ligne (110). Le reste des fumées, qui sert à assurer la recirculation de l'absorbant à l'intérieur du dispositif de désulfuration, pénètre dans le dispositif (103) par la ligne (111). La distribution des fumées apportées par la ligne (111) dans le réacteur (103) peut se faire à l'aide d'une canalisation annulaire non représentée sur la figure. La répartition des fumées entre les deux entrées peut être obtenue grâce à un volet (112) tel que représenté sur la figure, ou par tout autre moyen équivalent connu de l'Homme de l'Art. L'absorbant frais ou régénéré peut être introduit dans le système par des injecteurs (113). Ces injecteurs (113) peuvent également être placés sur la ligne (111).

Les fumées une fois désulfurées dans le dispositif (103), quittent ledit dispositif par la ligne (114) et pénètrent dans la zone d'échange par convection (104). Elles sont ensuite dirigées vers le dépoussiéreur final (106) via la ligne (115).

Le dispositif (103) peut être fait d'une enveloppe métallique recouverte de matériaux réfractaires isolants. Il peut aussi être constitué de parois membranées recouvertes partiellement ou totalement de matériaux réfractaires isolants.

Dans la configuration décrite à la figure 2, il n'y a pas de régénération de l'absorbant. Celui-ci est évacué ou valorisé ou encore stabilisé et mis en décharge. Sans sortir du cadre de l'invention, il est aussi possible dans un autre mode de réalisation de régénérer la totalité ou au moins une partie de l'absorbant issu du dépoussiéreur (du filtre électrostatique), par exemple dans un réacteur filtre (non représenté sur la figure 2) ou selon toute technique connue de l'homme du métier. L'absorbant régénéré peut ensuite être renvoyé dans le générateur au niveau des injecteurs (113). Cette solution permet par rapport à un dispositif sans régénération de n'envisager l'introduction d'absorbant frais que sous la forme d'un appoint périodique d'une faible quantité de produit et donc une consommation extrêmement réduite d'absorbant frais.

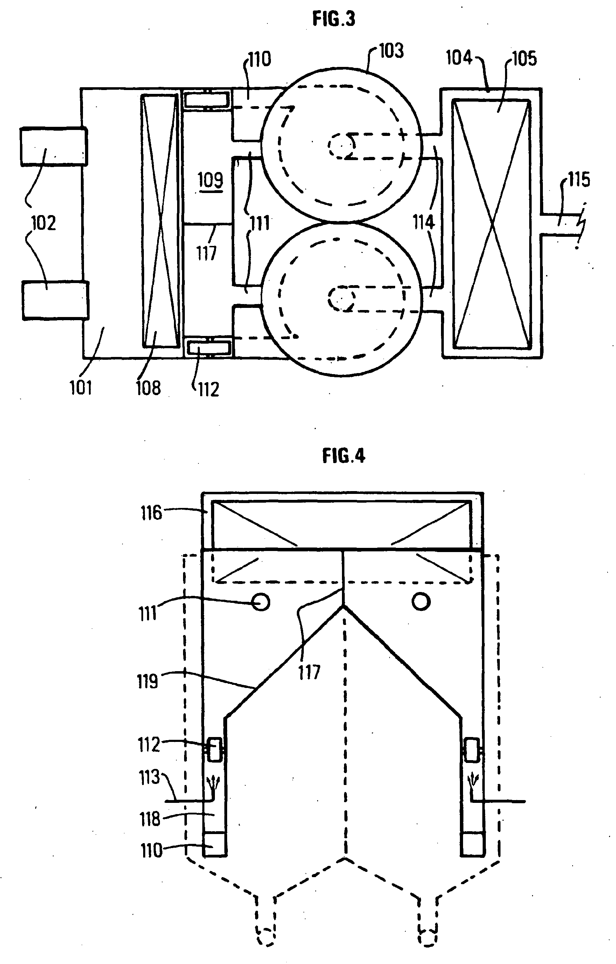

La figure 3 est une vue du dessus de l'installation qui permet de mieux comprendre la disposition des différents éléments, dans le cas d'une configuration avec deux réacteurs CRI (103) de désulfuration.

La figure 4 est une vue de détail, par l'arrière, de l'espace (109), accolé au fond de la chambre de combustion (101), et qui sert à l'alimentation en fumées des deux réacteurs CRI (103) qui apparaissent en pointillé sur la figure. Les fumées entrent dans l'espace (109) par l'ouverture (116) qui a sensiblement la largeur de la chambre de combustion (101). Elles sont partagées en deux flux sensiblement égaux à l'aide de la paroi (117), puis elles sont dirigées vers deux canalisations (118), grâce aux deux parois (119), qui font office de convergent. A l'entrée de la canalisation (118), on trouve le volet de réglage de débit (112). Ensuite, on a les injecteurs d'absorbant frais ou régénéré (113). Les canalisations (118) débouchent sur les canalisations (110), qui sont connectées aux deux dispositifs de désulfuration (103). La figure 4 montre également que l'alimentation des lignes (111) effectue par exemple, dans les convergents créés par les parois (119).

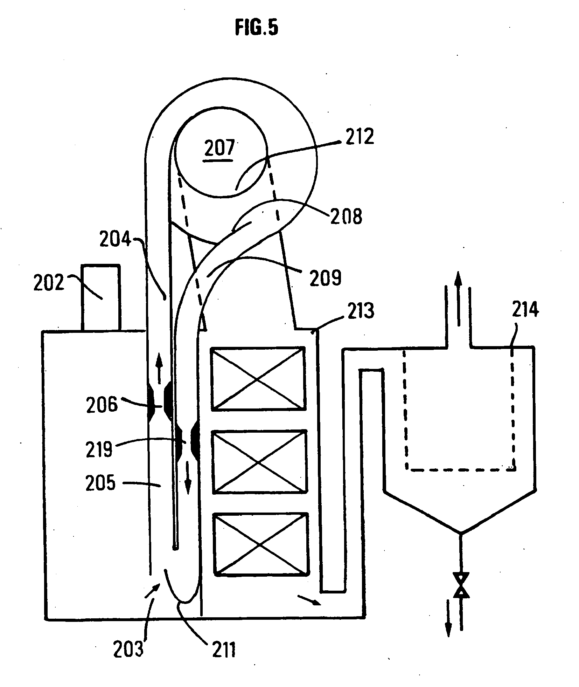

La figure 5 est un autre exemple de mise en oeuvre du procédé de l'invention, où l'on applique les configurations des figures 6 et 7 du brevet FR 2,748,402.

Le générateur thermique comprend alors une chambre de combustion (201) sensiblement parallélépipédique, équipée d'un ou plusieurs brûleurs en voûte (202). Les fumées quittent la chambre de combustion (201) par l'ouverture (203) et pénètrent dans un espace (204) de section rectangulaire, cet espace pouvant être créé par des parois membranées identiques à celles qui constituent le reste du générateur thermique. L'absorbant frais ou régénéré est introduit dans l'espace (204) par le ou les injecteurs (205), qui peuvent se présenter sous la forme d'une rampe d'injection sensiblement horizontale. Un dispositif (206) tel un venturi ou équivalent peut être mis en place en amont, au niveau ou en aval du dispositif d'injection, pour assurer un mélange rapide et homogène de l'absorbant avec les fumées à traiter. Les fumées pénètrent ensuite dans le dispositif de désulfuration proprement dit, qui, comme indiqué dans le brevet FR 2,748,402, peut être une simple volute sensiblement cylindrique ayant la largeur de l'espace (204). Dans la volute, l'absorbant est progressivement séparé des fumées par effet centrifuge. En fin de volute, une paroi (208) permet de séparer le flux gaz/absorbant en deux parties, une partie riche en absorbant en périphérie, et une partie appauvrie en absorbant au centre. La partie riche en absorbant pénètre dans l'espace (209) pour être recyclée à l'entrée de l'espace (204). La circulation du mélange gaz/absorbant dans l'espace (209) peut être engendrée ou favorisée par des éjecteurs ou dispositifs équivalents (210), ces éjecteurs étant alimentés par de la vapeur ou des fumées recyclées prélevées sur le dépoussiéreur final ou encore tout autre fluide. La liaison (211) entre l'espace (209) et l'espace (204) peut être agencée de façon à créer un effet d'aspiration dans ledit espace (209) grâce aux fumées issues de la chambre de combustion. Les fumées appauvries en absorbant quittent le dispositif de désulfuration (207) par la ou les liaisons (212) et pénètrent ensuite dans la zone d'échange par convection (213). Elles rejoignent ensuite le dépoussiéreur final (214).
Les conditions préférées de fonctionnement de la désulfuration pour la mise en oeuvre de la présente invention ont été déterminées. Ainsi la température moyenne dans le dispositif de désulfuration est en générale comprise entre 500 et 1300°C. Elle est de préférence comprise entre 800 et 1100 °C si on effectue la désulfuration avec des absorbants calciques perdus, tandis qu'elle est comprise entre 700 et 1000 °C pour les absorbants régénérables. D'autre part, les débits d'absorbant sont tels que la concentration en solides dans les fumées, hors recyclage, est comprise entre 0,1 et 1000 g/Nm3, et de préférence entre 1 et 100 g/Nm3. Avantageusement, le taux de recyclage du gaz dans le dispositif est compris entre 1 et 50 % et de préférence entre 10 et 50 % et le taux de recyclage de l'absorbant (c'est à dire le rapport entre le débit de l'absorbant en recirculation et le débit de l'absorbant frais ou régénéré) est compris entre 1 et 50 et de préférence entre 2 et 10. Dans les conditions optimales de fonctionnement, la granulométrie des absorbants est comprise entre 0 et 1000 microns, et de préférence entre 5 et 50 microns. Enfin la masse volumique des particules d'absorbant est avantageusement comprise entre 100 et 5000 kg/m³ et de préférence entre 1000 et 2500 kg/m³.

## Revendications

1. Procédé de génération de chaleur avec des émissions réduites d'oxydes de soufre dans lequel :
a) on effectue la combustion d'un combustible contenant du soufre dans une zone de combustion (101) comprenant une zone d'échange de chaleur dans laquelle on extrait au moins en partie de la chaleur, et on récupère des effluents ou fumées de combustion à une température comprise entre 800 et 1200°C,
b) on fait traverser les fumées résultantes de ladite combustion et chargées en oxydes de soufre dans un espace (109) servant à l'alimentation et à la distribution des fumées dans un dispositif de désulfuration (103) fonctionnant avec un recyclage d'un absorbant solide des oxydes de soufre,
c) on injecte l'absorbant dans ledit espace,
d) on fait entrer les fumées chargées en oxydes de soufre dans ledit dispositif,
e) on fait pénétrer les fumées désulfurées dans une zone d'échange par convection (104) et on extrait au moins une partie de la chaleur desdites fumées, **caractérisé en ce que**
● on sépare le mélange résultant des étapes b) et c) dans une zone de séparation gaz/solide interne dudit dispositif (103) comprenant une zone périphérique pour le recyclage de l'absorbant, une zone intermédiaire pour la désulfuration dans laquelle on fait entrer tangentiellement les fumées dans ledit dispositif, et une zone centrale pour l'évacuation des fumées;
● on évacue de ladite zone interne de séparation, d'une part, l'effluent gazeux débarrassé de la majeure partie des oxydes de soufre et au moins en partie refroidi et, d'autre part, lesdites particules d'absorbant comprenant lesdits composés soufrés pour les recycler.

2. Procédé selon la revendication 1, **caractérisé en ce qu'**on régénère après l'étape e) au moins une partie desdites particules d'absorbant comprenant lesdits composés soufrés et qu'on réinjecte les particules d'absorbant régénéré dans l'espace (109) servant à l'alimentation du dispositif de désulfuration (103).

3. Procédé selon la revendication 1, **caractérisé en ce qu'**on utilise un absorbant calcique et **en ce que** la température moyenne de désulfuration est comprise entre 800 et 1100°C.

4. Procédé selon la revendication 1 ou 2, **caractérisé en ce qu'**on utilise un absorbant magnésien régénérable et **en ce que** la température moyenne de désulfuration est comprise entre 700 et 1000°C.

5. Procédé selon l'une des revendications précédentes, **caractérisé en ce qu'**on fait traverser après l'étape de combustion a) les fumées par un ou des faisceaux surchauffeurs de vapeur.

6. Procédé selon l'une des revendications précédentes, **caractérisé en ce que** les débits d'absorbant sont tels que la concentration en solides dans les fumées, hors recyclage, est comprise entre 0,1 et 1000 g/Nm³.

7. Procédé selon l'une des revendications précédentes, **caractérisé en ce que** le taux de recyclage du gaz dans le dispositif est compris entre 1 et 50 %.

8. Procédé selon l'une des revendications précédentes, **caractérisé en ce que** le taux de recyclage de l'absorbant est compris entre 1 et 50.

9. Procédé selon l'une des revendications précédentes, **caractérisé en ce que** la granulométrie des absorbants est comprise entre 0,1 et 1000 microns.

10. Procédé selon l'une des revendications précédentes, **caractérisé en ce que** la masse volumique des particules d'absorbant est comprise entre 100 et 5000 kg/m³.

## Claims

1. A method of generating heat with reduced emissions of sulphur oxides, in which:
a) a fuel containing sulphur is burned in a combustion area (101) including a heat exchange area in which the heat is at least partly extracted, and combustion effluents or fumes are recovered at a temperature of between 800 and 1200°C,
b) the fumes resulting from said combustion and loaded with sulphur oxides are made to travel into a space (109) for feeding and distributing the fumes into a desulphurisation device (103) which operates with recycling of a solid absorbent of sulphur oxides,
c) the absorbent is injected into said space,
d) the fumes loaded with sulphur oxides are made to enter into said device,
e) the desulphurised fumes are made to penetrate into a convectional exchange area (104) and at least a part of the heat of said fumes is extracted, **characterised in that**
● the mixture resulting from steps b) and c) is separated in an internal gas/solid separation area of said device (103) including a peripheral area for recycling the absorbent, an intermediate area for desulphurisation in which the fumes are made to enter tangentially into said device, and a central area for the evacuation of the fumes;
● on the one hand, the gas effluent which is free from the most part of the sulphur oxides and at least partly cooled is evacuated from the internal separation area and, on the other hand, said absorbent particles including said sulphur compounds are evacuated in order to recycle them.

2. The method according to claim 1, **characterised in that,** at least a part of said absorbent particles including said sulphurised compounds are regenerated after step e) and **in that** the particles of regenerated absorbent are reinjected into the space (109) for feeding the desulphurisation device (103).

3. The method according to claim 1, **characterised in that** a calcic absorbent is used and **in that** the average desulphurisation temperature is between 800 and 1100°C.

4. The method according to claim 1 or 2, **characterised in that** a regenerable magnesium absorbent is used and **in that** the average desulphurisation temperature is between 700 and 1000 °C.

5. The method according to one of the preceding claims, **characterised in that**, after the combustion step a), the fumes are made to travel via one or more vapour superheating bundles.

6. The method according to one of the preceding claims, **characterised in that** the flows of absorbent are such that the concentration of solids in the fumes, not taking recycling into consideration, is between 0.1 and 1000g/Nm³.

7. The method according to one of the preceding claims, **characterised in that** the recycling level of the gas in the device is between 1 and 50%.

8. The method according to one of the preceding claims, **characterised in that** the recycling level of the absorbent is between 1 and 50.

9. The method according to one of the preceding claims, **characterised in that** the granulometry of the absorbents is between 0.1 and 1000 microns.

10. The method according to one of the preceding claims, **characterised in that** the volumetric mass of the absorbent particles is between 100 and 5000kg/m³.

## Patentansprüche

1. Wärmeerzeugungsverfahren mit verringerten Emissionen von Schwefeloxiden, wobei:
a) ein schwefelhaltiger Brennstoff in einem Verbrennungsbereich (101) verbrannt wird, wobei letzterer einen Wärmeaustauschbereich umfasst, in dem mindestens ein Teil der Wärme entzogen wird, und wobei die Abgase oder Verbrennungsrauchgase bei einer Temperatur zwischen 800 und 1200 °C abgefangen werden,
b) die bei der Verbrennung entstehenden Rauchgase, die mit Schwefeloxiden belastet sind, durch einen Raum (109) geleitet werden, welcher dazu dient, die Rauchgase einer Entschwefelungsvorrichtung (103), die unter Rückführung eines feststofflichen Absorptionsmittels für Schwefeloxide betrieben wird, zuzuführen und darin zu verteilen,
c) das Absorptionsmittel dem Raum zugeführt wird,
d) die Rauchgase, die mit Schwefeloxiden belastet sind, in die Vorrichtung eingeleitet werden,
e) die entschwefelten Rauchgase in einen Konvektionsaustauschbereich (104) eingeleitet werden und den Rauchgasen mindestens ein Teil ihrer Wärme entzogen wird, **dadurch gekennzeichnet, dass**
- die Mischung, die nach den Schritten b) und c) erhalten wird, in einem internen Gas/Feststoff-Trennungsbereich der Vorrichtung (103) getrennt wird, wobei dieser Bereich einen Randbereich für die Wiedergewinnung des Absorptionsmittels, einen Zwischenbereich für die Entschwefelung, in welchen die in der Vorrichtung befindlichen Rauchgase tangential eingeleitet werden, sowie einen Mittelbereich für die Ableitung der Rauchgase umfasst;
- aus dem internen Trennungsbereich einerseits der Abgasstrom, der von einem Großteil der Schwefeloxide befreit und mindestens teilweise abgekühlt wurde, hinausgeleitet wird, während andererseits die Partikel des Absorptionsmittels, welches die Schwefelverbindungen umfasst, entnommen werden, um sie wieder dem Verfahren zuzuführen.

2. Verfahren nach Anspruch 1, **dadurch gekennzeichnet, dass** nach dem Schritt e) die Absorptionsmittelpartikel, welche die Schwefelverbindungen umfassen, mindestens teilweise regeneriert werden und dass die regenerierten Absorptionsmittelpartikel erneut dem Raum (109), welcher der Versorgung der Entschwefelungsvorrichtung (103) dient, zugeführt werden.

3. Verfahren nach Anspruch 1, **dadurch gekennzeichnet, dass** ein calciumhaltiges Absorptionsmittel verwendet wird und dass die durchschnittliche Entschwefelungstemperatur zwischen 800 und 1.100 °C beträgt.

4. Verfahren nach Anspruch 1 oder 2, **dadurch gekennzeichnet, dass** ein regenerierbares magnesiumhaltiges Absorptionsmittel verwendet wird und dass die durchschnittliche Entschwefelungstemperatur zwischen 700 und 1.000 °C beträgt.

5. Verfahren nach einem der vorhergehenden Ansprüche, **dadurch gekennzeichnet, dass** die Rauchgase nach dem Verbrennungsschritt a) von einem oder mehreren gebündelten Dampfüberhitzerstrahlen durchquert werden.

6. Verfahren nach einem der vorhergehenden Ansprüche, **dadurch gekennzeichnet, dass** die Zufuhrraten des Absorptionsmittels derart eingestellt sind, dass die Konzentration an Feststoffen in den Rauchgasen, ohne Berücksichtigung der Rückführung, zwischen 0,1 und 1.000 g/Nm³ beträgt.

7. Verfahren nach einem der vorhergehenden Ansprüche, **dadurch gekennzeichnet, dass** die Rückführungsquote des Gases in der Vorrichtung zwisehen 1 und 50 % beträgt.

8. Verfahren nach einem der vorhergehenden Ansprüche, **dadurch gekennzeichnet, dass** die Rückführungsquote des Absorptionsmittels zwischen 1 und 50 beträgt.

9. Verfahren nach einem der vorhergehenden Ansprüche, **dadurch gekennzeichnet, dass** die Korngröße des Absorptionsmittels zwischen 0,1 und 1.000 Mikrometer beträgt.

10. Verfahren nach einem der vorhergehenden Ansprüche, **dadurch gekennzeichnet, dass** die Dichte der Absorptionsmittelpartikel zwischen 100 und 5.000 kg/m³ beträgt.
